# EUROPÄISCHE PATENTANMELDUNG

(11) **EP 4 732 997 A1**
(43) Veröffentlichungstag der Anmeldung: **29.04.2026**
(21) Anmeldenummer: 24208341.8
(22) Anmeldetag: 23.10.2024
(51) Int. Cl.: B25B 23/10, F03D 13/10, B23P 19/06, B25J 9/00, B25J 15/00

(54) **ROBOTERHAND ZUM AUTOMATISCHEN EINSCHRAUBEN EINER GEWINDESTANGENBAUGRUPPE**

(71) Anmelder: Wobben Properties GmbH, 26607 Aurich (DE)
(72) Erfinder: Biebl, Herbert, 26624 Südbrookmerland (DE)
(74) Vertreter: Eisenführ Speiser

(57) **Zusammenfassung**

Die Erfindung betrifft eine Roboterhand (1) zum automatischen Einschrauben einer Gewindestangenbaugruppe (300) in eine Gewindebohrung (405) einer Schraubverbindung (400) einer Windenergieanlage (100), insbesondere einer Flanschverbindung wie etwa einer Blattflanschverbindung, wobei die Gewindestangenbaugruppe (300) eine Gewindestange (301) mit einer Gewindestangenlängsachse (L) und eine auf die Gewindestange (301) aufgeschraubte Mutter (302) aufweist. Es wird vorgeschlagen, dass die Roboterhand (1) einen Greifer (3) mit einer Greiferlängsachse (G) aufweist, der dazu eingerichtet ist, in einer offenen Stellung die Mutter (302) freizugeben und in einer geschlossenen Stellung die Mutter (302) formschlüssig zu umschließen, und einen relativ zu dem Greifer (3) in Richtung der Greiferlängsachse (G) beweglichen Stopper (5) aufweist, der dazu eingerichtet ist, zwischen einer zurückgezogenen Freigabeposition und einer vorgeschobenen Anschlagposition hin und her bewegt zu werden, wobei der Stopper (5) dazu eingerichtet ist, in der Anschlagposition stirnseitig an der Gewindestange (301) anzuliegen und eine Längsbewegung der Gewindestange (301) auf den Greifer (3) zu zu sperren.

## Beschreibung

Die vorliegende Erfindung betrifft eine Roboterhand zum automatischen Einschrauben einer Gewindestangenbaugruppe in eine Gewindebohrung einer Schraubverbindung einer Windenergieanlage, insbesondere einer Flanschverbindung wie etwa einer Blattflanschverbindung, wobei die Gewindestange und Baugruppe eine Gewindestange mit einer Gewindestangenlängsachse und eine auf die Gewindestange aufgeschraubte Mutter aufweist.

Das Einschrauben von Schraubverbindungen in Schraubverbindungen, beispielsweise Flanschverbindungen, ist bei Windenergieanlagen allgemein bekannt. Viele Bauteile werden über Schraubverbindungen miteinander verbunden. Die Anzahl der vorzunehmenden Einschraubvorgänge ist aufgrund der großen Durchmesser der Bauteile einer Windenergieanlage beträchtlich, insbesondere im Bereich der Nabe.

Um den Zeitaufwand für das Einschrauben in solche Schraubverbindungen zu reduzieren, wird das Automatisieren solcher Tätigkeiten angestrebt. Es sind daher Versuche unternommen worden, den Einschraubvorgang teilweise oder vollständig zu automatisieren, wobei Schwierigkeiten bei Verwendung einer Roboterhand zum einen das Greifen der Schraubmittel, und zum anderen das Einschrauben der Schraubmittel in die Schraubverbindung betreffen.

Es sind Versuche unternommen worden, unter Verwendung herkömmlicher Schrauben mit langem Gewinde und fest am Gewinde angeordnetem Schraubenkopf eine solche Automatisierung umzusetzen. Die Verwendung solcher Schrauben ist zwar bei automatisierten Einschraubvorgängen grundsätzlich machbar, es hat sich aber als nachteilig herausgestellt, dass beim Einschrauben der vorgenannten herkömmlichen Schrauben in die Schraubverbindung eine hohe Torsion auf dem Gewindeabschnitt der Schraube aufgebracht wird. Hierdurch wird mittels der Torsion Energie in der Schraube gewissermaßen gespeichert, die nach dem Beenden des Anziehvorgangs ein Lösemoment auf die Schraubverbindung ausübt. Das Anziehen auf ein Ziel-Drehmoment ist daher erschwert, und erfordert mitunter ein nachträgliches neues Korrigieren des Anzugsmoments der Schraubverbindung, um die Sicherheit eines Haltens des Bauteils an der Windenergieanlage zu gewährleisten. Aufgrund der hohen wirkenden Kräfte und großen Dimensionen der zu verbindenden Bauteile ist Sicherheit hoch priorisiert.

Es ist daher das Bestreben vorhanden, nach Möglichkeit keine Standard-Schrauben mit festem Schraubkopf an einem Gewinde verwenden zu müssen, sondern Gewindestangen, auf denen separate Muttern aufgeschraubt sind. Das Verwenden solcher Baugruppen aus Gewindestange und Mutter ist allerdings im Stand der Technik bislang nicht automatisiert möglich gewesen. Stattdessen wurde bislang ein manuelles Verschrauben dieser Baugruppe praktiziert. Es musste dabei entweder separat die Gewindestande ein- und danach die Mutter aufgeschraubt werden, oder es musste bei zuvor aufgeschraubter Mutter noch eine temporäre Befestigung der Mutter erfolgen, damit ein Drehmoment auf die Baugruppe aufgebracht werden kann. Dies wurde im Stand der Technik beispielsweise durch das manuelle Aufbringen einer Kontermutter gelöst, die allerdings dann nach dem erfolgten Montieren wieder entfernt werden musste.

Die Aufgabe der vorliegenden Erfindung war es vor diesem Hintergrund, eine Roboterhand anzugeben, welche die vorstehend beschriebenen Nachteile möglichst weitgehend überwindet. Insbesondere lag der Erfindung die Aufgabe zugrunde, eine Roboterhand der eingangs bezeichneten Art dahingehend zu verbessern, dass ein automatisches Einschrauben einer Gewindestangenbaugruppe ermöglicht wird. Insbesondere lag der Erfindung ferner die Aufgabe zugrunde, das automatische Einschrauben einer Gewindestangenbaugruppe zu ermöglichen, welches zeiteffizient durchgeführt werden kann, ohne die Sicherheit der Schraubverbindung zu beeinträchtigen.

Die Erfindung löst die ihr zugrundeliegende Aufgabe bei einer Roboterhand der eingangs bezeichneten Art in eine ersten Aspekt, indem die Roboterhand einen Greifer mit einer Greiferlängsachse aufweist, der dazu eingerichtet ist, in einer offenen Stellung die Mutter freizugeben und in einer geschlossenen Stellung die Mutter formschlüssig zu umschließen, und einen relativ zu dem Greifer in Richtung der Greiferlängsachse beweglichen Stopper aufweist, der dazu eingerichtet ist, zwischen einer zurückgezogenen Freigabeposition und einer vorgeschobenen Anschlagposition hin- und her bewegt zu werfen, wobei der Stopper dazu eingerichtet ist, in der Anschlagposition stirnseitig an der Gewindestange anzuliegen und eine Längsbewegung der Gewindestange auf den Greifer zuzusperren. Die Anschlagposition des Stoppers relativ zum Greifer definiert dabei zugleich die Länge des möglichen Gewindeüberstands der Gewindestange aus der Mutter heraus. Der Stopper erzeugt aus der Gewindestange und der Mutter in der Anschlagposition in anderen Worten temporär eine Schraube.

Die Erfindung löst die aus dem Stand der Technik bekannten Probleme, indem sie für den Greifer und den Stopper eine Aufgabenteilung definiert. Die Aufgabenteilung ist hierbei dergestalt, dass der Greifer, indem er die Mutter formschlüssig umschließt, eine Rotation der Mutter relativ zur Gewindestande sperrt, während der Stopper durch sein Anliegen an der Gewindestange und sperren einer Längsbewegung der Gewindestange in Richtung des Greifers ebenfalls eine Rotation der Gewindebaustange insgesamt sperrt. In dieser Anlageposition wird die Relativbewegung der Mutter zum Bolzen blockiert, so dass die Gewindestangenbaugruppe temporär wie eine Schraube wirken kann. Wird ein Drehmoment auf den Greifer ausgeübt, wird also entweder über den Stopper oder über den Greifer und seinen Formschluss ein Drehmoment auf die Gewindestangengruppe aufgebracht. Aufgrund der Funktion des Stoppers kann sich die Mutter nicht an der Gewindestange entlang bewegen, und zwar weder relativ zu der Gewindestange noch relativ zum Greifer, denn der Stopper sperrt in Anschlagposition die Bewegung der Gewindestange. Da der Greifer in Längsrichtung bewegbar ist, ist es zudem in einem gewissen Rahmen möglich, auf unterschiedliche Gewindestangenüberstände oberhalb der Mutter Rücksicht zu nehmen. Es gelingt also mit einem dergestalt flexibel ausgebildeten Greifer mit längsbeweglichem Stopper, Gewindestangenbaugruppen zuverlässig automatisch zu ergreifen, selbst wenn sich der Gewindeüberstand über der Mutter, der dem Stopper entgegenragt, von Baugruppe zu Baugruppe leicht unterschiedet. Auf die Zuverlässigkeit des Haltens an der Roboterhand für die Drehmomentübertragung wirkt sich dies indes nicht nachteilig aus. Die Erfindung basiert letztlich auf dem Gedanken, mittels des Stoppers aus der Gewindestangenbaugruppe temporär für den Einschraubprozess in mechanischer Hinsicht eine Art feste Schraube zu generieren, indem der Stopper gegen die Gewindestange gefahren wird, nachdem der Greifer die Mutter umschlossen hat. Da die Mutter selbst aber nicht fest mit der Gewindestange verbunden ist, sondern die Drehmomentübertragung letztlich über den Stopper erfolgt, ist die Drehmomenteinbringung in die Gewindestange optimiert, so dass die Gewindestange weniger stark tordiert wird als es bei einer konventionellen Schraube geschehen würde.

Unter einem formschlüssigen Umschließen ist im Rahmen der Erfindung das Umschließen in Umfangsrichtung zu verstehen, welches ein Verdrehen der Mutter gegenüber dem Greifer aufgrund des Ineinandergreifens von Mutter und Greifer verhindert.

Die temporäre Fixierung der Gewindestangenbaugruppe ist vorzugsweise dazu eingerichtet, ausreichend Drehmoment für einen Voranzug an der Schraubverbindung aufzunehmen. In bevorzugten Ausführungsformen kann vorgesehen werden, zusätzlich zu diesem Voranzug der Schraubverbindung einen Endanzug mit einem vordefinierten End-Drehmoment durchzuführen, wobei der Endanzug mit demselben Roboter oder einem anderen Roboter mit dediziertem Endeffektor durchgeführt werden kann.

In einer bevorzugten Weiterbildung weist der Greifer zwei Greiferbacken auf, die zwischen der offenen Stellung und der geschlossenen Stellung hin- und her bewegbar sind. Die beiden Greiferbacken sind vorzugsweise gegenüberlegend am Greifer angeordnet und dazu eingerichtet, sich jeweils um eine Schwenkachse zwischen der offenen und geschlossenen Stellung hin und her zu bewegen. Alternativ wären auch andere Bewegungsformen, wie beispielsweise eine rein laterale translatorische Bewegung möglich. Die Schwenkbewegung hat indes in bevorzugten Ausführungsformen weitere mechanische Vorteile, auf die nachfolgend im Einzelnen eingegangen wird.

In einer bevorzugten Ausführungsform weisen die Greiferbacken innenseitig einen Konturabschnitt auf, der zum formschlüssigen Angreifen an der Mutter eingerichtet ist, vorzugsweise an einer Außenkontur der Mutter.

In besonders bevorzugten Ausführungsformen ist die Mutter mit einer polygonalen Außenkontur versehen, beispielsweise einer Sechskantkontur, und der Konturabschnitt innenseitig an den Greiferbacken ist jeweils korrespondierend zu der Außenkontur der Mutter ausgebildet.

Jede der Greiferbacken weist vorzugsweise eine Teilkontur auf, die zusammengesetzt zumindest partiell einem Negativ der Außenkontur der Mutter entspricht, sodass ein Formschluss in Umfangsrichtung zwischen dem Greifer und der Mutter erfolgt, wenn die Greiferbacken in der geschlossenen Stellung um die Mutter herum angeordnet sind.

In einer weiteren bevorzugten Ausführungsform weisen die Greiferbacken innenseitig einen Gewindeabschnitt auf, der zum formschlüssigen Angreifen an einem Gewinde der Gewindestange eingerichtet ist. Damit wird erreicht, dass gleichzeitig mit dem Schließen der Greiferbacken um die Mutter herum auch die Gewindeabschnitte den aus der Mutter überstehenden Teil der Gewindestange formschlüssig ergreifen können, ohne die Gewindestange dabei zu klemmen. Indem in dieser Ausführungsform die Greiferbacken zusätzlich zu einer umfangsmäßigen Fixierung der Mutter auch in das Gewinde eingreifen, kann der Greifer die gesamte Gewindestangenbaugruppe zuverlässig auch in Längsrichtung fixieren, ohne dass die Greiferbacken einen Hinterschnitt benötigen, mit der die Mutter auf der von der Roboterhand wegweisenden Seite der Mutter jene hintergreifen müssten. Die Greiferkontur kann dann mit dem Konturabschnitt offen auslaufen, weil die Gewindestange und die Mutter über den Gewindeabschnitt zuverlässig am Greifer gehalten werden.

In einer weiteren bevorzugten Ausführungsform sind der Konturabschnitt und der Gewindeabschnitt benachbart zueinander an der Greiferbacke vorgesehen, wobei der Gewindeabschnitt auf eine der dem Stopper zugewandten Seite der Greiferbacke angeordnet ist. Auf diese Weise wird der kurze Gewindeüberstand der Gewindestange auf der greiferseitigen Seite der Mutter zum Fixieren der Gewindestangenbaugruppe genutzt, und die Gesamtgröße des Greifers in Längsrichtung, bezogen auf die Gewindestangenachse oder Greiferlängsachse kann minimiert werden.

In einer weiteren bevorzugten Ausführungsform sind die Greiferbacken quer zur Greiferlängsachse schwenkbar an einer um die Greiferlängsachse drehbaren Welle angeordnet. Die Welle ist drehbar angetrieben, um den Einschraubvorgang durchzuführen, wenn die Gewindestangenbaugruppe vom Greifer gehalten wird, an der Roboterhand.

In einer weiteren bevorzugten Ausführungsform weisen die Greiferbacken an ihrem äußeren Umfang jeweils eine Gleitfläche auf, und der Greifer weist eine in Richtung der Greiferlängsachse zwischen einer zurückgezogenen Stellung und einer vorgeschobenen Stellung bewegliche Hülse auf, welche dazu eingerichtet ist, entlang der Gleitflächen über die Greiferbacken geschoben zu werden, und in der zurückgezogenen Stellung eine Schwenkbewegung der Greiferbacken freizugeben, und in der vorgeschobenen Stellung die Greiferbacken in der geschlossenen Stellung zu sperren. Die Schwenkachse der Greiferbacken befindet sich mit anderen Worten in der zurückgezogenen Stellung in Richtung der Greiferlängsachse außerhalb der Hülse, und in der vorgeschobenen Stellung liegt die Hülse überlappend zu den Schwenkachsen der Greiferbacken. Mittels Vorschieben der Hülse werden die Greiferbacken von ihrer Freigabestellung in die geschlossene Stellung gedrängt.

Vorzugsweise ist die Hülse gleitend auf der Welle gelagert, vorzugsweise auf einem Keilwellenprofil.

Weiter vorzugsweise ist die Hülse mit einem Linear-Antrieb gekoppelt, welcher dazu eingerichtet ist, die Hülse in Greiferlängsrichtung zwischen der zurückgezogenen Stellung und der vorgeschobenen Stellung hin- und herzubewegen.

In einer weiteren bevorzugten Ausführungsform ist die Welle in Richtung der Greiferlängsachse federnd an der Roboterhand gelagert. Durch die federnde Lagerung, vorzugsweise in Verbindung mit einem hinterschneidungsfreien Konturabschnitt zum formschlüssigen Angreifen an die Mutter, kann gewährleistet werden, dass der Greifer sich sauber auch mit seinem Gewindeabschnitt um die Gewindestange herumlegt, wenn die Greiferbacken in die geschlossene Stellung gebracht werden.

Besonders bevorzugt ist die federnde Lagerung zwischen einer starren Lagerung und einer federnden Lagerung umschaltbar, beispielsweise pneumatisch oder hydraulisch, und die Roboterhand ist dazu eingerichtet, die Lagerung der Welle immer dann federnd zu stellen, wenn die Greiferbacken von der offenen Stellung in die geschlossene Stellung bewegt werden. Hierdurch kann verhindert werden, dass der Gewindeabschnitt der Greiferbacken die Flankenspitzen der Gewindestange beschädigt.

In einer weiteren bevorzugten Ausführungsform sind die Greiferbacken mittels eines oder mehrerer Federelemente miteinander wirkverbunden, wobei die Federelemente dazu eingerichtet sind, eine Rückstellkraft in Richtung der offenen Stellung auf die Greiferbacken auszuüben, wenn die Greiferbacken in der geschlossenen Stellung angeordnet sind. Insbesondere in den Ausführungsformen, in denen zum Schließen der Greiferbacken die vorstehend beschriebene Hülse verwendet wird, dienen die Federelemente als Rückstellelemente dazu, die Greiferbacken automatisch in Richtung der offenen Stellung auszulenken, wenn die Hülse in die zurückgezogene Stellung bewegt wird.

In einer weiteren bevorzugten Ausführungsform ist die Welle eine Hohlwelle, und der Stopper weist eine in der Hohlwelle geführte Stange auf, welche an einem den Greiferbacken zugewandten Ende eine Stirnfläche aufweist, die zur Anlage an der Gewindestange ausgebildet ist.

In einer weiteren bevorzugten Ausführungsform weist die Roboterhand eine Zentrierzange auf, welche dazu eingerichtet ist, die Gewindestange in Richtung der Greiferlängsachse zu dem Greifer beabstandet zu fassen, und parallel zur Greiferlängsachse auszurichten.

Die Zentrierzange weist vorzugsweise zwei Seitenteile auf, die dazu eingerichtet sind, in Querrichtung bezogen auf die Greiferlängsachse zwischen einer Freigabestellung und einer Zentrierstellung hin- und her bewegt zu werden, wobei die Bewegung in Querrichtung etwa translatorisch, mittels einer Schwenkbewegung, oder einer translatorischrotatorischen Mischbewegung erfolgen kann. Die Zentrierzange ist insbesondere dann hilfreich, wenn die Roboterhand die Gewindestangenbaugruppe gerade gegriffen hat, und die Gewindestangenbaugruppe an die Schraubverbindung heranführen muss. Hierbei ist ein genaues Ausrichten der Gewindestangenbaugruppe enorm hilfreich, um eine zügige automatische Positionierung mittels optischer Erkennungsmittel zu erreichen. Sobald die Gewindestangenbaugruppe korrekt positioniert ist, und an die Schraubverbindung herangeführt wurde, kann die Zentrierzange aus der Zentrierstellung wieder in die Freigabestellung verbracht und seitlich aus dem Eingriffsbereich wegbewegt werden, um keine Kollision mit der Schraubverbindung hervorzurufen, wenn der Einschraubvorgang fortschreitet.

In einer weiteren bevorzugten Ausführungsform weist die Gewindestangenbaugruppe eine Unterlegscheibe auf, welche an der Gewindestange angeordnet ist, und der Greifer weist einen Magneten auf, der dazu eingerichtet ist, die Unterlegscheibe benachbart zu der Mutter zu halten, wenn der Greifer in dem geschlossenen Zustand ist. Der Magnet kann beispielsweise an einer Stirnseite einer der Greiferbacken angeordnet sein. Die Roboterhand kann am Greifer auch mehr als einen Magneten aufweisen, beispielsweise einen Magneten an jeder Greiferbacke. Sofern die Gewindestange magnetisierbar ist, kann der Magnet auch am Stopper angeordnet sein, um mittelbar die Gewindestange und die Mutter zu magnetisieren, damit die Unterlegscheibe daran haftet.

Die Erfindung ist vorstehend in einem ersten Aspekt unter Bezugnahme auf die Roboterhand selbst beschrieben worden. In einem weiteren Aspekt betrifft die Erfindung ferner eine Montagevorrichtung zum Einschrauben von Gewindestangenbaugruppen in einem Bauteil, vorzugsweise in eine Schraubverbindung, insbesondere eine Flanschverbindung wie etwa eine Blattflanschverbindung, einer Windenergieanlage.

Die Erfindung löst auch diesbezüglich die eingangs bezeichnete Aufgabe, indem die Montagevorrichtung einer Roboterhand nach einer der vorstehend beschriebenen bevorzugten Ausführungsformen des ersten Aspekts aufweist.

Es wird insbesondere eine Montagevorrichtung vorgeschlagen, die einen Vorratstisch aufweist, die eine Mehrzahl von Gewindestangenbaugruppen bereithält, die vorzugsweise an vorbestimmten Positionen in einem Roboterkoordinatensystem auf dem Vorratstisch angeordnet ist, sowie einen Roboterarm, der eine Roboterhand zum Greifen jeweils einer Gewindestangenbaugruppe aufweist, eine Sensorvorrichtung zum Erkennen einer Position der Gewindestangenbaugruppe und/oder zum Erkennen einer Position der Einschraubposition an dem Bauteil und an der Steuerung, die dazu eingerichtet ist, den Roboterarm und die Roboterhand in Abhängigkeit eines Steuerprogramms und in Abhängigkeit von Signalen der Sensoreinrichtung zu steuern, wobei die Roboterhand nach einer der vorstehend beschriebenen bevorzugten Ausführungsformen ausgebildet ist.

Die Erfindung macht sich hinsichtlich der Montagevorrichtung dieselben Vorteile und Erkenntnisse zunutze wie hinsichtlich der Roboterhand des ersten Aspekts. Bevorzugte Ausführungsformen der Roboterhand sind somit zugleich bevorzugte Ausführungsformen der Montagevorrichtung und umgekehrt, weswegen zur Vermeidung von Wiederholungen auf die obigen Ausführungen verwiesen wird.

In einem weiteren Aspekt betrifft die Erfindung ferner ein Montageverfahren zum Einschrauben von Gewindestangenbaugruppen in einem Bauteil einer Windenergieanlage, vorzugsweise einer Flanschverbindung, insbesondere einer Blattflanschverbindung.

Das Montageverfahren löst die erfindungsgemäße Aufgabe, indem es die folgenden Schritte umfasst:
- Bereitstellen einer Gewindestangenbaugruppe, welche eine Gewindestange, eine auf die Gewindestange aufgeschraubte Mutter, und vorzugsweise eine benachbart zu der Mutter an der Gewindestange angeordnete Unterlegscheibe aufweist;
- Greifen der Gewindestangenbaugruppe mittels einer Roboterhand, wobei ein Greifer mit einer Greiferlängsachse die Mutter in eine geschlossene Stellung bewegt wird, in welcher der Greifer die Mutter formschlüssig umschließt, und ein relativ zu dem Greifer in Richtung der Greiferlängsachse beweglicher Stopper in eine vorgeschobene Anschlagposition bewegt wird, in welcher der Stopper stirnseitig an der Gewindestange anliegt und eine Längsbewegung der Gewindestange auf den Greifer zu sperrt,
- Einschrauben der Gewindestangenbaugruppe mittels der Roboterhand in das Bauteil, und
- Lösen der Roboterhand von der eingeschraubten Gewindestangenbaugruppe, wobei der Stopper in eine zurückgezogene Freigabeposition bewegt wird, und der Greifer in eine offene Stellung bewegt wird, und in der offenen Stellung die Mutter freigibt.

Mittels des erfindungsgemäßen Verfahrens gelingt unter Verwendung einer entsprechend ausgebildeten Roboterhand das Einschrauben einer Gewindestangenbaugruppe vollständig automatisiert in die Schraubverbindung in einem einzigen durchgehenden Vorgang, wobei zuverlässig ein gewünschtes Drehmoment erzeugt werden kann. Die Sicherheit einer so hergestellten automatischen Verbindung übertrifft jene, die mit einem automatisierten Einschrauben von konventionellen Schrauben verbunden wäre, weil das in vorstehen beschriebenen Gründen eine geringere Torsion die Gewindestange eingebracht werden muss, um die Verschraubung durchzuführen. Das Anziehen der Schraubverbindung kann in dem Verfahren mit einem Voranzugsmoment erfolgen, und anschließend kann vorzugsweise ein weiterer Schritt erfolgen, in dem die Mutter relativ zu der eingeschraubten Gewindestange auf ein vorbestimmtes Zieldrehmoment angezogen wird (Endanzug). Dieser Schritt kann in bevorzugten Ausführungsformen mittels eines dedizierten Endeffektors erfolgen.

Vorzugsweise greift der Stopper dann an die Gewindestange an, wenn der Greifer sich in der geschlossenen Stellung befindet und die Mutter in Umfangsrichtung formschlüssig umgibt. Weiter vorzugsweise wird der Stopper von der Gewindestange wegbewegt, bevor der Greifer in die offene Stellung bewegt wird, um eine Beschädigung der Gewindestange zu vermeiden.

Das Monateverfahren macht sich somit ebenfalls die Vorteile und Erkenntnisse der Roboterhand und der Montagevorrichtung der beiden vorgenannten Aspekte zunutze. Bevorzugte Ausführungsformen der Roboterhand und der Montagevorrichtung sind somit zugleich bevorzugte Ausführungsformen des Montageverfahrens und umgekehrt, weswegen wiederum zur Vermeidung von Wiederholungen auf die obigen Ausführungen verwiesen wird.

Die Erfindung wird nachfolgend unter Bezugnahme auf ein bevorzugtes Ausführungsbeispiel näher beschrieben. Hierbei zeigen:
- Fig. 1: eine schematische Darstellung einer Windenergieanlage,
- Fig. 2: eine schematische räumliche Ansicht einer Montagevorrichtung gemäß einem bevorzugten Ausführungsbeispiel,
- Fig. 3: eine schematische Detailansicht der Montagevorrichtung gemäß Fig. 2,
- Fig. 4: eine weitere Detailansicht der Montagevorrichtung gemäß den Figuren 2 und 3,
- Fig. 5: eine Detailansicht einer Roboterhand der Montagevorrichtung gemäß den Figuren 2 bis 4,
- Fig. 6: eine weitere Detailansicht der Roboterhand gemäß Figuren 2 bis 5,
- Fig. 7: eine weitere Detailansicht der Roboterhand gemäß den Figuren 2 bis 6,
- Fig. 8: eine weitere Detailansicht der Roboterhand gemäß den Figuren 2 bis 7,
- Fig. 9: eine weitere Detailansicht der Roboterhand gemäß den Figuren 2 bis 8,
- Fig. 10: eine weitere Detailansicht der Roboterhand gemäß den Figuren 2 bis 9,
- Fig. 11: eine weitere Detailansicht der Roboterhand gemäß den Figuren 2 bis 10,
- Fig. 12: eine weitere Detailansicht der Roboterhand gemäß den Figuren 2 bis 11, und
- Fig. 13: eine weitere Detailansicht der Roboterhand gemäß den Figuren 2 bis 12.

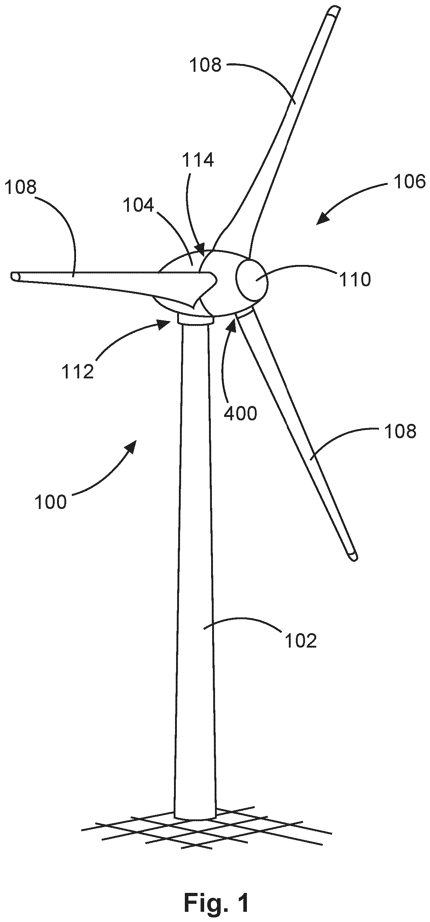

Fig. 1 zeigt eine schematische Darstellung einer Windenergieanlage 100, die mit den Technologien der vorliegenden Erfindung hergestellt worden ist. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter können durch Pitchmotoren an den Rotorblattwurzeln 109 der jeweiligen Rotorblätter verändert werden. Zur Verstellung des Pitchwinkels sind die Rotorblätter 108 an den Rotorblattwurzeln 109 mit einem Blattflanschlager verbunden, welches an einer Schraubverbindung 400 mit der Nabe in der Gondel 104 verbunden ist.

Die vorliegende Erfindung beschreibt exemplarisch die Verwendung der erfindungsgemäßen Roboterhand bzw. der erfindungsgemäßen Montagevorrichtung zum Herstellen einer Verbindung an der Schraubverbindung 400 des Blattflanschlagers. Es ist aber ebenso erfindungsgemäß möglich und vorgesehen, die erfindungsgemäße Roboterhand bzw. Montagevorrichtung in modifizierter Form an anderen Schraubverbindungen zu verwenden.

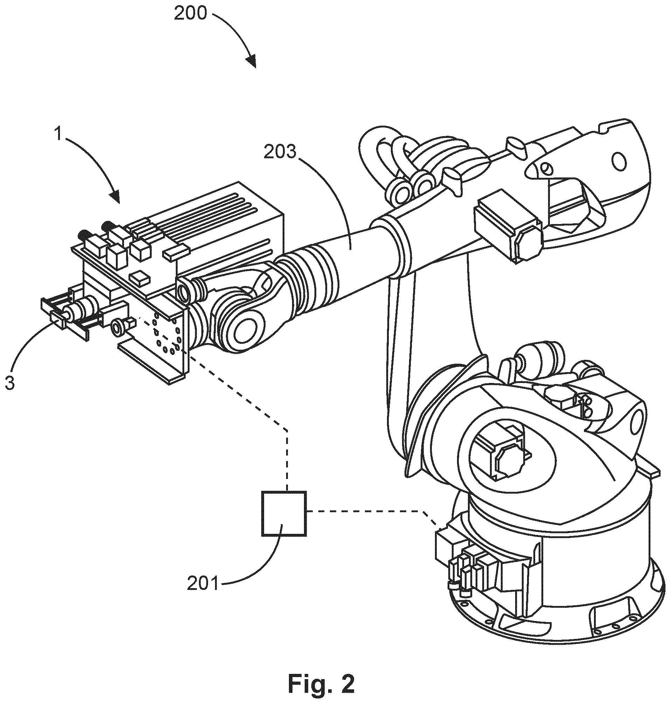

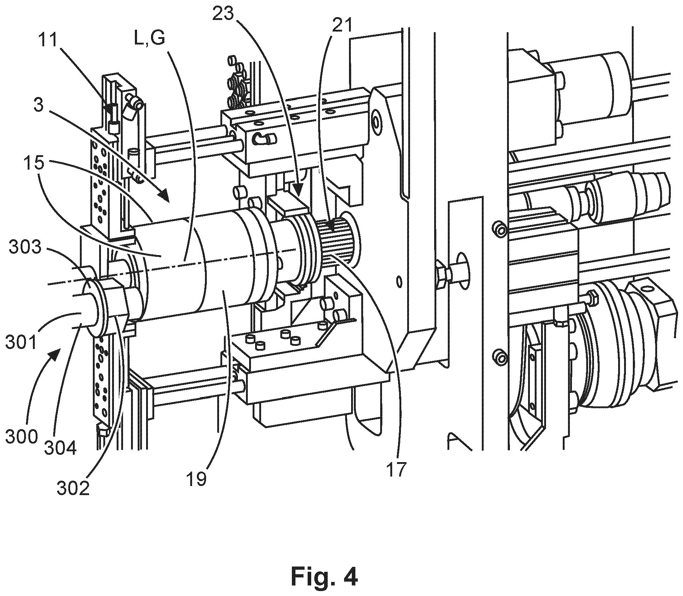

Um eine zeiteffiziente Montage gestalten zu können, ist zur Montage der Schraubverbindung 400 eine Montagevorrichtung 200 vorgesehen, wie sie in Auszügen in Fig. 2 dargestellt ist. Die Montagevorrichtung 200 weist einen Roboterarm 203 auf, der eine Roboterhand 1 aufweist. An der Roboterhand 1 ist ein Greifer 3 vorgesehen, der in den folgenden Figuren eingehender beschrieben wird. Die Montagevorrichtung 200 weist eine Steuerung 201 auf, die signalleitend mit dem Roboterarm 203 und/oder der Roboterhand 1 verbunden und dazu eingerichtet ist, den Roboterarm 203 und die Roboterhand 1 zum automatisierten Einschrauben von Gewindestangenbaugruppen 300 (vgl. Fig. 4) in eine Schraubverbindung 400 der Windenergieanlage 100 (vgl. Figur 1) einzuschrauben. Der Roboterarm 203 kann ein allgemein bekannter mehrachsiger Roboter sein.

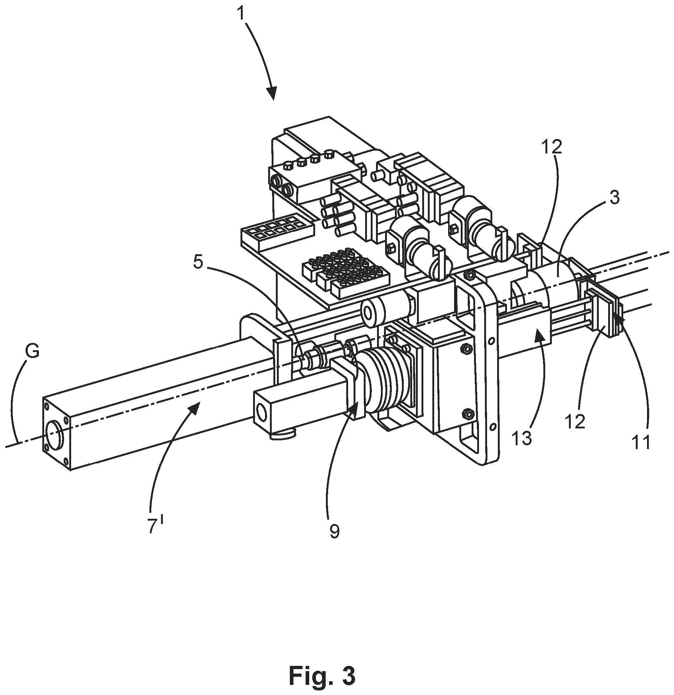

Die Roboterhand 1 ist näher in den folgenden Figuren dargestellt. So zeigt Fig. 3 die Roboterhand 1 gemäß Figur 2 ohne Motorgehäuse. Dadurch ist der Blick freigegeben auf einen Antrieb 9, der drehmomentübertragend mit dem Greifer 3 gekoppelt ist, beispielsweise über einen Zahnriemenantrieb. Der Antrieb 9 kann beispielsweise als Elektromotor ausgebildet sein. Überden Antrieb 9 wird die Gewindestangenbaugruppe 300 eingeschraubt

Die Roboterhand 1 weist zusätzlich zu dem Greifer 3 einen Stopper 5 auf, der in Richtung einer Greiferlängsachse L linear beweglich ausgebildet ist. Der Stopper 5 wird vorzugsweise von einem Linearantrieb 7 angetrieben, der beispielsweise ein elektrischer Spindelantrieb sein kann, oder ein hydraulischer oder pneumatischer Aktuator. Der Stopper 5 wird im Betrieb durch den Linearantrieb 7 in Position gefahren. Nachdem die Anschlagposition des Stoppers 5 erreicht ist, wird der Linearantrieb 7 gestoppt. Ist der Linearantrieb ein Spindelantrieb, wird eine etwaige Druckbelastung vorzugsweise durch eine Selbsthemmung der Spindel gehalten.

Bei sehr geringem Gewindeüberstand zwischen Mutter und Gewindestange (vgl. Fig. 4) kann es sein, dass der Stopper 5 in seiner Anschlagposition zu Beginn eines Einschraubvorgangs noch nicht an der Gewindestange anliegt. Während einer Anfangsphase des Einschraubvorgangs schraubt sich die Gewindestange solange in die Mutter hinein, bis sie durch den Stopper 5 gehalten wird. Danach wird durch den Stopper 5 gewährleistet, dass die Gewindestange und Mutter zueinander fixiert bleiben, und die Gewindestange in das Bauteil eingeschraubt werden kann. Nach erfolgter Eindrehung und Voranzug ist der Vorgang beendet. Die Spannung wird durch Zurückfahren des Stoppers 5 gelöst und die Nuss kann geöffnet werden. Sobald der Linearantrieb 7 stoppt, ist der Stopper 5 vorzugsweise starr relativ zu den Greiferbacken.

Im Bereich des Greifers 3 weist die Roboterhand zusätzlich eine Zentrierzange 11 auf, die beiderseitig des Greifers 3 jeweils ein Zangenelement 12 aufweist. Die Zangenelemente 12 der Zentrierzange 11 sind mittels eines Zangenantriebs 13, der vorzugsweise als Linearantrieb ausgebildet ist, beispielsweise pneumatisch, in Richtung der Greiferlängsachse bewegbar. Zusätzlich können die Zangenelemente 12 seitlich, durch Schwenken und/oder translatorisch, auf die Greiferlängsachse G hinbewegt werden oder von ihr weg bewegt werden, um etwaig von dem Greifer 3 gehaltene Gewindestangenbaugruppen parallel zur Greiferlängsachse G auszurichten bzw. dort zu halten.

Wie sich im Detail näher aus Figur 4 ergibt, weist der Greifer 3 zwei Greiferbacken 15 auf, die relativ zu der Greiferlängsachse G gegenüberliegend zueinander angeordnet sind. In der in Figur 4 gezeigten Stellung befinden sich die Greiferbacken 15 in einer geschlossenen Stellung, in der sie eine Gewindestangenbaugruppe 300 halten.

Die Gewindestangenbaugruppe 300 weist eine Gewindestange 301 auf, sowie eine Mutter 302 und eine Unterlegscheibe 303. Die Mutter 302 ist auf ein Gewinde 304 der Gewindestange 301 aufgeschraubt.

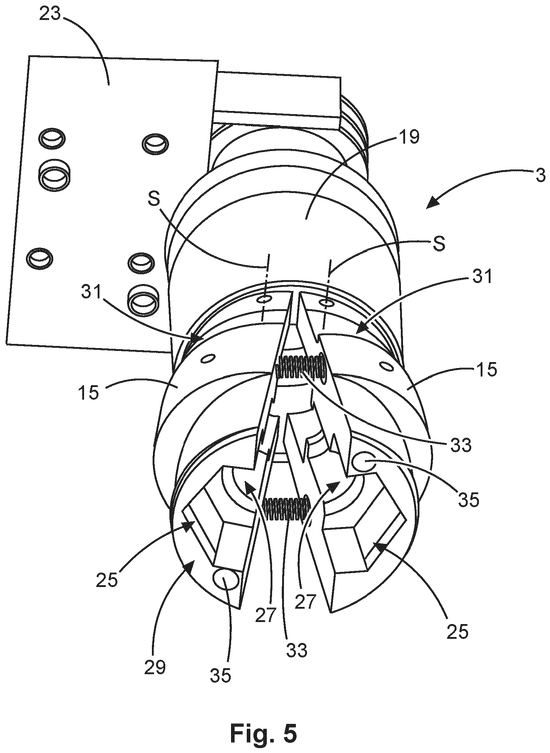

Die Greiferbacken 15 sind drehmomentübertragend mit einer Welle 17 gekoppelt, die von dem Antrieb 9 angetrieben wird. An ihrem äußeren Umfang weist die Welle 17 ein Keilwellenprofil 21 auf. Auf dem Keilwellenprofil 21 ist eine Hülse 19 gleitend gelagert, welche von einem Antrieb 23, vorzugsweise ein Linear-Antrieb, etwa pneumatisch, angetrieben wird. Der Antrieb 23 ist dazu eingerichtet, die Hülse 19 zwischen einer, in Fig. 4 gezeigten, vorgeschobenen Stellung und einer zurückgezogenen Stellung hin und herzu bewegen. In der in Fig. 4 gezeigten vorgeschobenen Stellung zwingt die Hülse 19 die Greiferbacken 15 in die gezeigte geschlossene Stellung und sperrt diese in jener Position. Wird die Hülse 19 mittels des Antriebs 23 in ihre zurückgezogene Stellung entlang des Keilwellenprofils 17 bewegt, vgl. Fig. 5, können die Greiferbacken 15 ihre offene Stellung einnehmen, in welcher die Gewindestangenbaugruppe 300 freigegeben ist, bzw. in welcher eine neue Gewindestangenbaugruppe 300 aufgenommen werden kann. In der Stellung gemäß Fig. 4 befindet sich die Zentrierzange 11 in Anlage mit der Gewindestange 301 und hält diese mit deren Gewindestangenlängsachse L koaxial zur Greiferlängsachse G.

In Fig. 5 ist die Kinematik des Greifers 3 näher gezeigt. Die Greiferbacken 15 weisen an ihrem äußeren Umfang jeweils eine Gleitfläche 31 auf. Wird die Hülse 19 mittels des Antriebs 23 aus der in Fig. 5 gezeigten zurückgezogenen Stellung in die vorgeschobene Stellung (Fig. 4) bewegt, gleitet die Hülse 19 an den Gleitflächen 31 entlang und erzwingt so die Schließbewegung der Greiferbacken 15 um ihre jeweiligen Schwenkachsen S. Die Greiferbacken 15 sind zudem über Federelemente 33 miteinander wirkverbunden, die im Abstand zu den Schwenkachsen S angeordnet und dazu eingerichtet sind, eine in Richtung der offenen Stellung wirkende Rückstellkraft auf die Greiferbacken 15 auszuüben. Sobald also die Hülse 19 in Richtung der zurückgezogenen Stellung gemäß Fig. 5 bewegt worden ist, sodass die Gleitflächen 31 und die Schwenkachsen S nicht mehr von der Hülse 19 überdeckt sind, werden die Greiferbacken 15 von den Federelementen 33 in die offene Stellung zurückbewegt.

Die Greiferbacken 15 weisen am Ende einer Stirnseite 29, die der Gewindestangenbaugruppe zugewandt ist, einen ersten, inneren Konturabschnitt 25 auf, der dazu eingerichtet ist, mit der Mutter 302 der Gewindestangenbaugruppe 300 in Umfangsrichtung formschlüssig in Eingriff zu gelangen. Dazu ist eine partielle oder vollständige Formentsprechung zu der Kontur der Mutter 302 im Konturabschnitt 25 vorgesehen. Im vorgesehenen Ausführungsbeispiel weist die Mutter 302 ein SechskantProfil auf, und ein entsprechendes Negativprofil wird jeweils anteilig in den Konturabschnitten 25 der Greiferbacken 15 abgebildet. Es wäre indes auch möglich, keine vollständige Formentsprechung darzustellen, sondern nur eine abschnittsweise Formentsprechung, die ein Verdrehen der Mutter 302 innerhalb des Konturabschnitts 25 zuverlässig verhindert.

Der Konturabschnitt 25 ist zur Stirnseite 29 hin offen, vorzugsweise hinterschneidungsfrei, ausgebildet. Benachbart zu dem Konturabschnitt 25 weisen die Greiferbacken 15 auf ihrer Innenseite ferner einen Gewindeabschnitt 27 auf, dessen Gewinde korrespondierend zu dem Gewinde 304 der Gewindestange 301 ausgebildet ist. Werden die Greiferbacken 15 in die geschlossene Stellung bewegt, ergreifen die beiden halbschalenartigen Greiferbacken 15 mit dem Gewindeabschnitt 27 das Gewinde 304 der Gewindestange 301 und legen sich mit dem Konturabschnitt 25 in Umfangsrichtung formschlüssig um die äußere Kontur der Mutter 302 herum, sodass eine Rotation der Mutter relativ zu der Gewindestange 301 verhindert wird, solange sich die Greiferbacken 15 in der geschlossenen Stellung befinden.

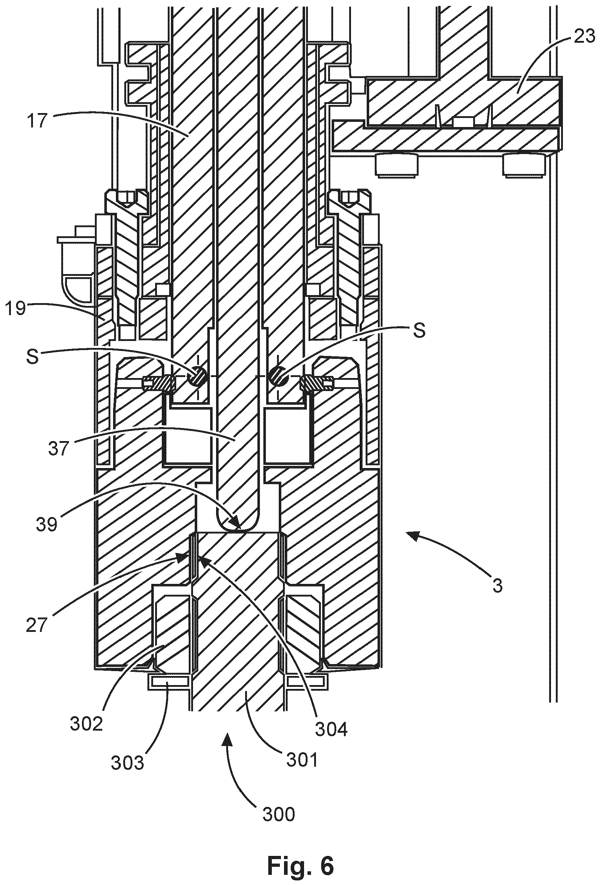

An der Stirnseite 29 der Greiferbacken 15 ist vorzugsweise wenigstens ein Magnet 35 vorgesehen, der dazu eingerichtet ist, eine etwaig vorhandene Unterlegscheibe 303 der Gewindestangenbaugruppe 300 verliersicher am Greifer 3 zu halten, während der Einschraubvorgang läuft. Der Greifvorgang beschränkt sich indes nicht nur auf die Bewegung der Greiferbacken 15, sondern die Roboterhand 1 beinhaltet als weiteren Mechanismus zum Greifen und Halten der Gewindestangenbaugruppe 300 den schon gezeigten Stopper 5. Der Stopper 5 weist an seinem greiferseitigen Ende eine Stange 37 auf, siehe Fig. 6, die innerhalb der als Hohlwelle ausgebildeten Welle 17 geführt ist.

Die Stange 37 weist eine Stirnfläche 39 auf, die dazu eingerichtet ist, stirnseitig an der Gewindestange 301 zur Anlage gebracht zu werden. Die Stange 37 befindet sich in Figur 6 in ihrer Anschlagposition, in der sie eine Längsbewegung der Gewindestange 301 auf den Greifer zu, also über die gezeigte Position hinaus, sperrt. Die Welle 17 ist vorzugsweise federnd an der Roboterhand 1 gelagert, sodass beim Ergreifen der Gewindestange 301 es den Greiferbacken 15 möglich ist, sich mit dem Gewindeabschnitt 27 sauber in das Gewinde 304 hineinzulegen, um nicht die Flankenspitzen des Greifers und/oder der Gewindestange 301 zu beschädigen. Die Drehmomenteinleitung von der Welle 17 über den Greifer 3 erfolgt auf diese Weise direkt in die Gewindestange 301 hinein.

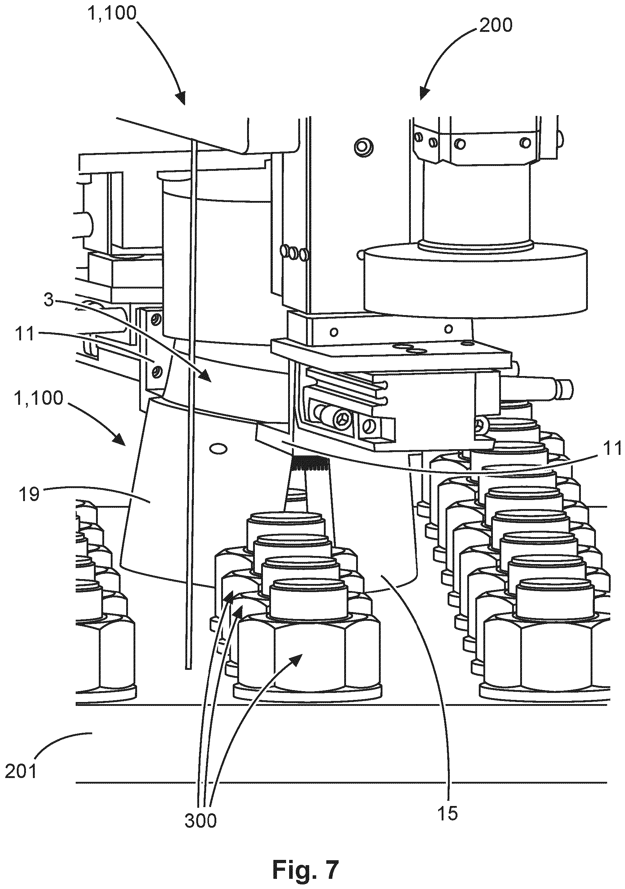

In den Figuren 7 bis 13 ist schematisch und auszugsweise der Ablauf des Einschraubverfahrens unter Verwendung der erfindungsgemäßen Roboterhand 1 gezeigt.

Auf einem Vorratstisch 201 der Montagevorrichtung 200 wird eine Mehrzahl von Gewindestangenbaugruppen 300 vorgehalten, die in der vorstehend beschriebenen Art und Weise ausgebildet sind. Mittels allgemein bekannter sensorischer Mittel wird vom Roboterarm 100 die Position der nächsten aufzunehmenden Gewindestangenbaugruppe 300 detektiert und die Roboterhand 1 über der Gewindestangenbaugruppe 300 positioniert. Dieser Zustand ist in Fig. 7 dargestellt. Die Greiferbacken 15 des Greifers 3 befinden sich in ihrer offenen Stellung, und der Stopper 5 (nicht dargestellt) befindet sich in seiner zurückgezogenen Stellung. Die Zentrierzange 11 ist aus dem Eingriffsbereich herausbewegt.

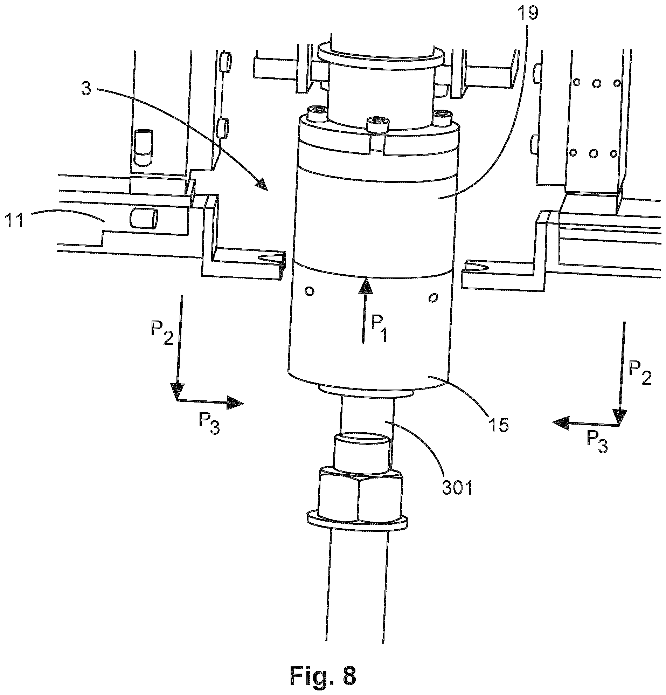

Bei korrekter Positionierung der Roboterhand 1 werden durch Ansteuerung des Antriebs 23 und Vorschieben der Hülse 19 die Greiferbacken 15 in ihre geschlossene Stellung bewegt und die Gewindestangenbaugruppe 300 erfasst. Dieser Zustand ist in Fig. 8 gezeigt. Die Gewindestangenbaugruppe 300 kann in Richtung des Pfeils P₁ vom Vorratstisch 201 entnommen werden. Ist die Gewindestangenbaugruppe 300 ausreichend weit vom Vorratstisch 201 beabstandet, kann die Zentrierzange 11 durch Bewegung in Richtung des Pfeils P₂ am Greifer 3 vorbeibewegt werden. Ist dies geschehen, können die Zangenelemente 12 der Zentrierzange 11 in Richtung der Pfeile P₃ nach innen auf die Gewindestange 301 zu bewegt werden, um diese zu zentrieren bzw. zentriert zu halten.

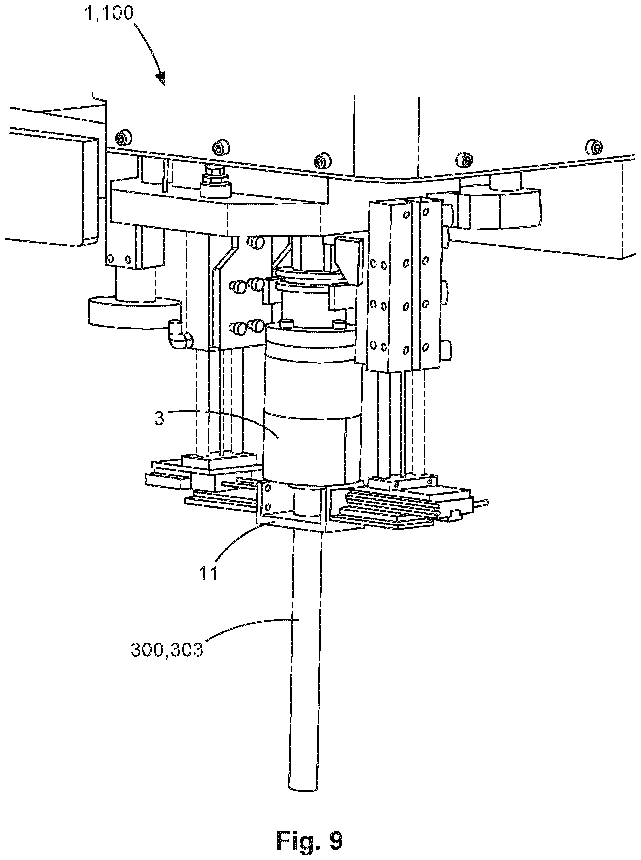

In Fig. 9 ist der Vorgang des Entnehmens der Gewindestangenbaugruppe 300 vom Vorratstisch 201 abgeschlossen, der Greifer befindet sich in der geschlossenen Stellung, und der Stopper 5 ist zwischenzeitlich in seine Anschlagposition gebracht worden, sodass eine Rotation des Greifers 3 winkelgetreu in eine entsprechende Rotation der Gewindestange 301 umgesetzt werden kann. Die Zentrierzange 11 verhindert ein seitliches Abgleiten oder Verrücken der Gewindestange 301 der Gewindestangenbaugruppe 300, und die Roboterhand 1 kann in diesem Zustand nun vom Roboterarm 100 zur Schraubverbindung 400 verfahren werden, um dort den Einschraubprozess vorzunehmen.

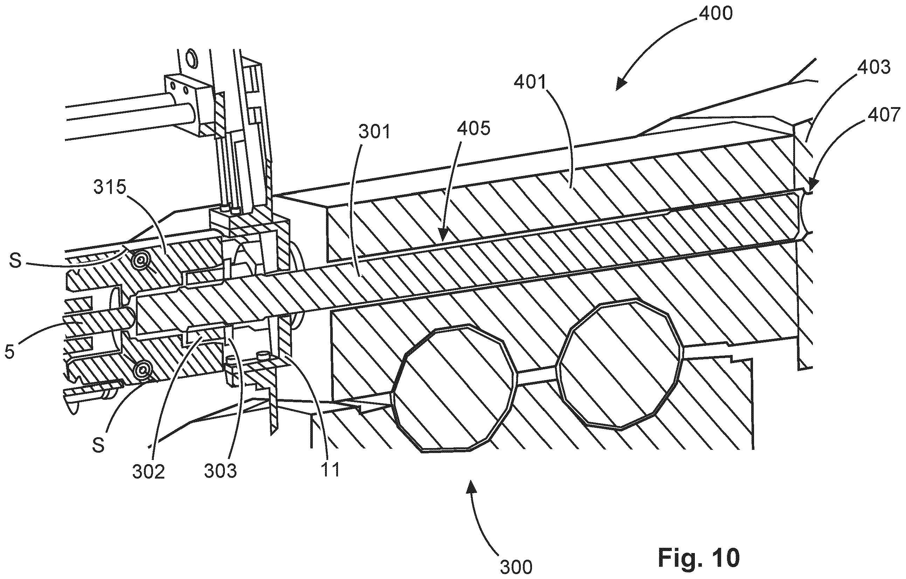

In Fig. 10 ist ein Zustand gezeigt, in dem die Gewindestangenbaugruppe 300 bereits an die Schraubverbindung 400 angenähert wurde, und in eine Durchgangsöffnung 405 eines ersten Bauteils 401, beispielsweise eines Blattlagers, eingeführt wurde. Während dieses Einführvorgangs befand sich die Zentrierzange 11 noch in der Zentrierstellung. Das Beginnen des Einschraubens durch rotatorisches Antreiben des Greifers 3 steht nun unmittelbar bevor. Durch Einschrauben der Gewindestange 301 wird die Gewindestangenbaugruppe 300 durch das erste Bauteil 401 hindurch mit dem zweiten Bauteil 403, vorstehend beispielsweise das Nabengehäuse der Windenergieanlage, verbunden. Das Nabengehäuse 403 weist hierzu eine korrespondierend ausgebildete Gewindebohrung 407 auf. Die Zentrierzange 11 wird bei Voranschreiten des Einschraubvorgangs aus dem Kollisionsbereich entfernt, indem die Zangenelemente 12 zur Seite bewegt werden, und die Zentrierzange auch in Richtung der Roboterhand 1 (nicht dargestellt) zurückgezogen wird.

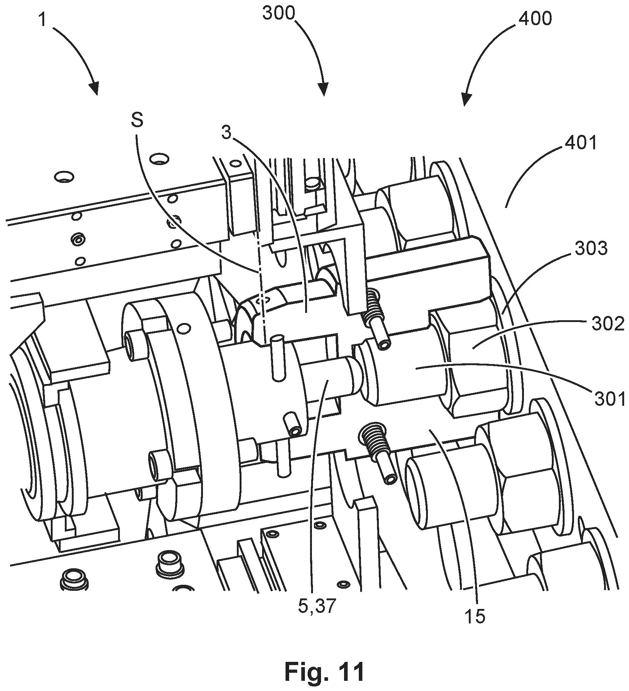

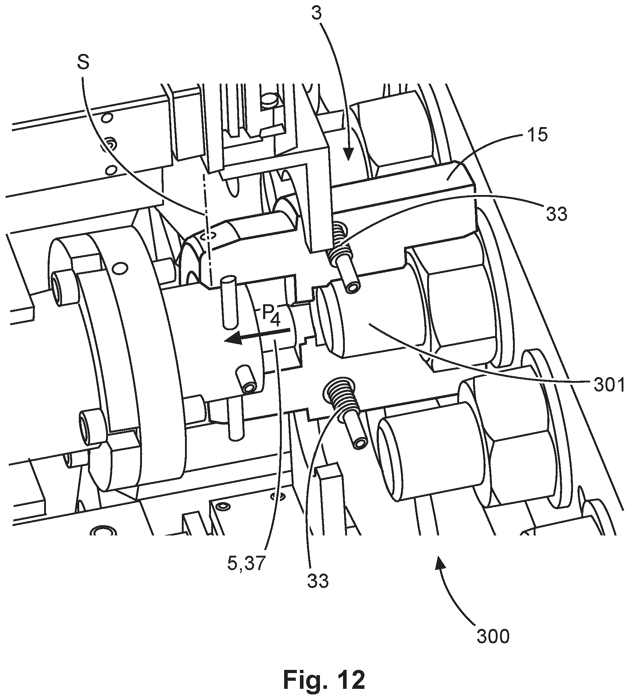

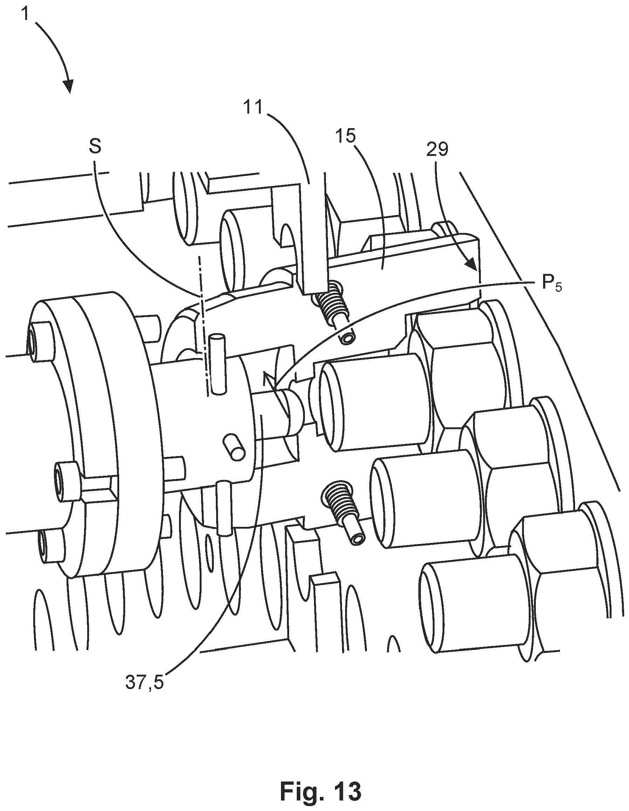

In Fig. 11 ist ein Zustand gezeigt, in dem die Gewindestangenbaugruppe 300 vollständig in die Schraubverbindung 400 eingeschraubt worden ist. Unter Mithilfe der Federelemente 33 (vgl. Fig. 5) können die Greiferbacken 15 nun in die offene Stellung verbracht werden, und die Roboterhand 1 kann durch Zurückfahren des Greifers 3, in Fig. 12 nach links, von der Gewindestangenbaugruppe 300 entfernt werden. Die Schwenkbewegung ist durch den Pfeil P₅ in Fig. 13 angedeutet. In der so gezeigten Konfiguration, also umfassend die Offenstellung der Greiferbacken 15, die zurückgezogene Stange 37 des Stoppers 5, und die aus dem Kollisionsbereich zurückgefahrene Zentrierzange 11, kann die Roboterhand 1 sogleich zum Ergreifen der nächsten Gewindestangenbaugruppe vom Vorratstisch 201 voranschreiten.

Es wurde gezeigt, dass das vorgeschlagene Verfahren, sowie die vorgeschlagene Roboterhand 1 und die vorgeschlagene Montagevorrichtung 200, ein zeiteffizientes Einschraubverfahren ermöglichen, welches in einem einzigen Arbeitsvorgang das Einschrauben einer Gewindestangenbaugruppe mit Gewindestange 301 und lose darauf befestigter Mutter 302, und optional Unterlegscheibe 303, in eine Bauteilverbindung wie beispielsweise eine Schraubverbindung 400 eines Blattflanschlagers einer Windenergieanlage 100 ermöglicht.

Wenngleich die Erfindung hier am Beispiel des Blattflanschlagers illustriert wurde, soll verstanden werden, dass die Erfindung keineswegs auf ein Blattflanschlager und die Verwendung daran beschränkt ist. Die erfindungsgemäße Roboterhand mit dem innovativen Greifersystem kann auch an anderen Schraubverbindungen wie etwa anderen Flanschverbindungen, die aus Effizienzgründen von einem automatisierten Einschrauben profitieren, verwendet werden.

Die Geometrie des Greifers 3 kann dazu an die gegebenen Einschraubbedingungen angepasst werden, d. h., seitliche Eingriffsbreite, d. h., Abstand zwischen den benachbarten Schraubverbindungen am Bauteil, Kontur der Mutter und Kontur des Gewindes. Darüber hinaus kann die Steuerung flexibel an die jeweiligen Bewegungsabläufe angepasst werden.

## Patentansprüche

1. Roboterhand (1) zum automatischen Einschrauben einer Gewindestangenbaugruppe (300) in eine Gewindebohrung (405) einer Schraubverbindung (400) einer Windenergieanlage (100), insbesondere einer Flanschverbindung wie etwa einer Blattflanschverbindung, wobei die Gewindestangenbaugruppe (300) eine Gewindestange (301) mit einer Gewindestangenlängsachse (L) und eine auf die Gewindestange (301) aufgeschraubte Mutter (302) aufweist,
**dadurch gekennzeichnet, dass** die Roboterhand (1) einen Greifer (3) mit einer Greiferlängsachse (G) aufweist, der dazu eingerichtet ist, in einer offenen Stellung die Mutter (302) freizugeben und in einer geschlossenen Stellung die Mutter (302) formschlüssig zu umschließen, und einen relativ zu dem Greifer (3) in Richtung der Greiferlängsachse (G) beweglichen Stopper (5) aufweist, der dazu eingerichtet ist, zwischen einer zurückgezogenen Freigabeposition und einer vorgeschobenen Anschlagposition hin- und herbewegt zu werden, wobei der Stopper (5) dazu eingerichtet ist, in der Anschlagposition stirnseitig an der Gewindestange (301) anzuliegen und eine Längsbewegung der Gewindestange (301) auf den Greifer (3) zu zu sperren.

2. Roboterhand (1) nach Anspruch 1,
**dadurch gekennzeichnet, dass** der Greifer (3) zwei Greiferbacken (15) aufweist, die zwischen der offenen Stellung und der geschlossenen Stellung hin und her bewegbar sind.

3. Roboterhand (1) nach Anspruch 2,
wobei die Greiferbacken (15) innenseitig einen Konturabschnitt (25) aufweisen, der zum formschlüssigen Angreifen an der Mutter (302) eingerichtet ist.

4. Roboterhand (1) nach Anspruch 2 oder 3,
**dadurch gekennzeichnet, dass** die Greiferbacken (15) innenseitig einen Gewindeabschnitt (27) aufweisen, der zum Eingreifen in ein Gewinde (304) der Gewindestange (301) eingerichtet ist.

5. Roboterhand (1) nach Anspruch 3 und 4,
**dadurch gekennzeichnet, dass** der Konturabschnitt (25) und der Gewindeabschnitt (27) benachbart an der Greiferbacke (15) vorgesehen sind, wobei der Gewindeabschnitt (27) auf einer dem Stopper (5) zugewandten Seite der Greiferbacke (15) angeordnet ist.

6. Roboterhand (1) nach einem der Ansprüche 2 bis 5,
**dadurch gekennzeichnet, dass** die Greiferbacken (15) quer zur Greiferlängsachse (G) schwenkbar an einer um die Greiferlängsachse (G) drehbaren Welle (17) angeordnet sind.

7. Roboterhand (1) nach Anspruch 6,
**dadurch gekennzeichnet, dass** die Greiferbacken (15) an ihrem äußeren Umfang jeweils eine Gleitfläche (31) aufweisen, und der Greifer (3) eine in Richtung der Greiferlängsachse (G) zwischen einer zurückgezogenen Stellung und einer vorgeschobenen Stellung bewegliche Hülse (19) aufweist, welche dazu eingerichtet ist, entlang der Gleitflächen (31) über die Greiferbacken (15) geschoben zu werden, und in der zurückgezogenen Stellung eine Schwenkbewegung der Greiferbacken (15) freizugeben, und in der vorgeschobenen Stellung die Greiferbacken (15) in der geschlossenen Stellung zu sperren.

8. Roboterhand (1) nach Anspruch 7,
**dadurch gekennzeichnet, dass** die Hülse (19) gleitend auf der Welle (17) gelagert ist, vorzugsweise auf einem Keilwellenprofil (21).

9. Roboterhand (1) nach einem der Ansprüche 7 oder 8,
**dadurch gekennzeichnet, dass** die Hülse (19) mit einem Linear-Antrieb (23) gekoppelt ist, welcher dazu eingerichtet ist, die Hülse (19) in Greiferlängsrichtung zwischen der zurückgezogenen Stellung und der vorgeschobenen Stellung hin- und herzubewegen.

10. Roboterhand (1) nach einem der Ansprüche 4 bis 9,
**dadurch gekennzeichnet, dass** die Welle (17) in Richtung der Greiferlängsachse (G) federnd an der Roboterhand (1) gelagert ist.

11. Roboterhand (1) nach einem der Ansprüche 6 bis 10,
**dadurch gekennzeichnet, dass** die Greiferbacken (15) mittels eines oder mehrerer Federelemente (33) wirkverbunden sind, wobei die Federelemente (33) dazu eingerichtet sind, eine Rückstellkraft in Richtung der offenen Stellung auf die Greiferbacken (15) auszuüben, wenn die Greiferbacken (15) in der geschlossenen Stellung angeordnet sind.

12. Roboterhand (1) nach einem der Ansprüche 6 bis 10,
**dadurch gekennzeichnet, dass** die Welle (17) eine Hohlwelle ist, und der Stopper (5) eine in der Hohlwelle geführte Stange (37) aufweist, welche an einem den Greiferbacken (15) zugewandten Ende eine Stirnfläche (39) aufweist, die zur Anlage an der Gewindestange (301) ausgebildet ist.

13. Roboterhand (1) nach einem der vorstehenden Ansprüche,
**dadurch gekennzeichnet, dass** die Roboterhand (1) eine Zentrierzange (11) aufweist, welche dazu eingerichtet ist, die Gewindestange (301) in Richtung der Greiferlängsachse (G) zu dem Greifer (3) beabstandet zu fassen und parallel zur Greiferlängsachse (G) auszurichten.

14. Roboterhand (1) nach einem der vorstehenden Ansprüche,
**dadurch gekennzeichnet, dass** die Gewindestangenbaugruppe (300) eine Unterlegscheibe (303) aufweist, welche an der Gewindestange (301) angeordnet ist, und der Greifer (3) einen Magneten (35) aufweist, der dazu eingerichtet ist, die Unterlegscheibe (303) benachbart zu der Mutter (302) zu halten, wenn der Greifer (3) in dem geschlossenen Zustand ist.

15. Montagevorrichtung (200) zum Einschrauben von Gewindestangenbaugruppen (300) in ein Bauteil (405), vorzugsweise in eine Schraubverbindung (400, 112, 114), insbesondere eine Flanschverbindung wie etwa Blattflanschverbindung einer Windenergieanlage (100), mit einem Roboterarm (203), der eine Roboterhand (1) aufweist, **dadurch gekennzeichnet, dass** die Roboterhand (1) zum Greifen jeweils einer Gewindestangenbaugruppe (300) eingerichtet und vorzugsweise nach einem der vorstehenden Ansprüche ausgebildet ist.

16. Montageverfahren zum Einschrauben von Gewindestangenbaugruppen (300) in ein Bauteil (405) einer Windenergieanlage, vorzugsweise einer Schraubverbindung (400), insbesondere einer Flanschverbindung wie etwa einer Blattflanschverbindung, umfassend die Schritte:
- Bereitstellen einer Gewindestangenbaugruppe (300), welche eine Gewindestange (301), eine auf die Gewindestange (301) aufgeschraubte Mutter (302), und vorzugsweise eine benachbart zu der Mutter (302) an der Gewindestange (301) angeordnete Unterlegscheibe (303) aufweist;
- Greifen der Gewindestangenbaugruppe (300) mittels einer Roboterhand (1), wobei ein Greifer (3) mit einer Greiferlängsachse (G) die Mutter (302) in eine geschlossene Stellung bewegt wird, in welcher der Greifer (3) die Mutter (302) formschlüssig umschließt, und ein relativ zu dem Greifer (3) in Richtung der Greiferlängsachse (G) beweglicher Stopper (5) in eine vorgeschobene Anschlagposition bewegt wird, in welcher der Stopper (5) stirnseitig an der Gewindestange (301) anliegt und eine Längsbewegung der Gewindestange (301) auf den Greifer (3) zu sperrt,
- Einschrauben der Gewindestangenbaugruppe (300) mittels der Roboterhand (1) in das Bauteil (405), und
- Lösen der Roboterhand (1) von der eingeschraubten Gewindestangenbaugruppe (300), wobei der Stopper (5) in eine zurückgezogene Freigabeposition bewegt wird, und der Greifer (3) in eine offene Stellung bewegt wird, und in der offenen Stellung die Mutter (302) freigibt.
